## Europäisches Patentamt

## European Patent Office

## Office européen des brevets

(19)

(11) Veröffentlichungsnummer: **0 100 751**
**B1**

(12) **EUROPÄISCHE PATENTSCHRIFT**

(45) Veröffentlichungstag der Patentschrift:
**22.03.89**

(51) Int. Cl.⁴: **B 30 B 9/24**

(21) Anmeldenummer: **83810336.4**

(22) Anmeldetag: **25.07.83**

(54) Entwässerungsverfahren.

(30) Priorität: **31.07.82 GB 8222168**

(73) Patentinhaber: **CIBA-GEIGY AG, Klybeckstrasse 141, CH-4002 Basel (CH)**

(43) Veröffentlichungstag der Anmeldung:
**15.02.84 Patentblatt 84/7**

(72) Erfinder: **Newton, Christopher, 7 Murchison Road Craigends Houston, Johnstone Renfrewshire Schottl. PA6 7JU (GB)**
Erfinder: **Morris, David James, Dr., 125 Southbrae Drive, Glasgow Schottland G13 1TU (GB)**

(45) Bekanntmachung des Hinweises auf die Patenterteilung:
**22.03.89 Patentblatt 89/12**

(84) Benannte Vertragsstaaten:
**BE CH DE FR GB IT LI NL**

(56) Entgegenhaltungen:
**DE-A- 2 805 883**
**FR-A- 1 186 390**
**FR-A- 1 292 966**
**FR-A- 2 311 134**

**AUFBEREITUNGSTECHNIK, Band 23, Juni 1982, Seiten 287-294, Wiesbaden, DE; B. SIMONS u.a.: "Die Entwässerung von Feinstkornschlämmen in der Steinkohlenaufbereitung mittels Siebbandpressen"**

# Beschreibung

Die Erfindung betrifft ein Verfahren zur Entwässerung von wäßrigen Zusammensetzungen, insbesondere von wäßrigen Pigmentfilterkuchen.

In der Pigmenttechnik umfassen konventionelle Filtermittel die Verwendung von z.B. Platten- und Rahmenpressen oder Vakuumfiltern. Wenn man solche bekannte Filtermittel auf Pigmentaufschlämmungen aus der Küpe anwendet, erhält man Filterkuchen, die in der Regel 20–40 Gew.-% Feststoff enthalten.

In der GB-A-1,516,326 wird ein Verfahren zur Erhöhung des Feststoffgehaltes von Pigmentfilterkuchen beschrieben. Dabei führt man die Filterkuchen in den Spalt zwischen zwei kreisförmig ausgehöhlten, perforierten und sich gegenläufig drehenden Walzen ein. Dann wird an das Innere der Walzen soviel Vakuum angelegt, daß die Flüssigkeit, die durch die Walzen aus dem Kuchen gepreßt wird, in das Innere der Walzen gesogen und somit vom Preßkuchen abgetrennt wird. Die Entfernung zwischen den Walzen kann so eingestellt werden, daß ein «Druck» von 3,5 bis 10,5 N/mm entsteht. Im weiteren wird diese Kraft pro Längeneinheit «Liniendruck» genannt.

Wir haben nun eine neue Methode zur Erhöhung des Feststoffgehaltes von Pigmentfilterkuchen oder -suspensionen gefunden, indem man eine Kombination von Oberflächendruck und Liniendruck verwendet, wobei der Liniendruck eine Größenordnung größer als in der GB-A-1,516,326 ist. Das schuppenförmige, freifließende und staubarme Produkt hat einen genügend hohen Feststoffgehalt, daß es direkt zur Herstellung von konzentrierten wässerigen Pigmentdispersionen verwendet werden kann. Die Schuppen können auch entweder direkt oder nach Entfernen des größten Teils des verbleibenden Wassers in das Endanwendungsmedium eingearbeitet werden, z.B. in Titen auf Öl- oder Wasserbasis, Farben oder plastischen Massen. Die Schuppen können durch Mischen in üblichen Vorrichtungen standardisiert werden.

Demnach betrifft die vorliegende Erfindung ein Verfahren zum Entwässern eines Pigmentfilterkuchens oder einer Pigmentsuspension, wobei man den Filterkuchen oder die Suspension in den Spalt zwischen zwei sich gegenläufig drehenden endlosen Bändern eingibt, die sich unter Spannung um eine oder mehr, vorzugsweise zwei oder mehr Walzen mit vorzugsweise abnehmendem Durchmesser bewegen, dabei an den Filterkuchen oder die Suspension einen Oberflächendruck anlegt und hernach den Filterkuchen oder die Suspension einem variablen Liniendruck (wie oben definiert) zwischen ein oder mehr Paaren von sich gegenläufig drehenden druckbelasteten Walzen unterwirft, wobei die Bänder aus einem für die Flüssigkeit im Filterkuchen oder in der Suspension durchlässigem Material bestehen, und die Bedingung gilt, daß für jedes entwässerte Pigmentprodukt Oberflächendruck, Liniendruck und Bandgeschwindigkeit so gewählt werden, daß der Endwassergehalt des Produktes nicht mehr als 10% höher, vorzugsweise gleich oder geringer als der kritische Feuchtigkeitsgehalt des Pigmentes im zu entwässernden Filterkuchen oder Suspension ist, wobei das erhaltene Produkt in Schuppenform anfällt.

Der kritische Feuchtigkeitsgehalt einer bestimmten Substanz, wie eines Pigmentes, ist jene Menge Wasser in Gewichtsprozenten, die in den Zwischenräumen der Teilchen zurückgehalten wird, nachdem all das frei verfügbare Oberflächenwasser entfernt wurde. Der kritische Feuchtigkeitsgehalt einer bestimmten Substanz wird durch ihre Teilchengröße und die Beschaffenheit ihrer Oberflächen beeinflußt. Zudem beeinflußt auch die Gegenwart von Additiven, wie typischerweise im Falle von Pigmenten, Harze oder oberflächenaktive Mittel, den kritischen Feuchtigkeitsgehalt. Normalerweise wird der kritische Feuchtigkeitsgehalt experimentell aus der Trocknungskurve eines Produktes bestimmt und wird als der Übergangspunkt vom konstanten Trockungsbereich zum fallenden Trocknungsbereich definiert.

Gemäß einer Ausführungsform des erfindungsgemäßen Verfahrens wird ein Pigmentfilterkuchen mit 35 bis 40 Gew.% Feststoffgehalt auf das untere Band einer Preßvorrichtung gebracht, die aus einem oberen und unteren durch einen Motor mit variabler Geschwindigkeit bewegten Band besteht und mit getrennten Waschvorrichtungen ausgerüstet ist, wobei die Spannung der Bänder mittels getrennter Spannarme variiert werden kann. Die Bänder werden zusammengedrückt, indem sie um eine oder mehr, vorzugsweise zwei oder mehr Walzen mit vorzugsweise abnehmendem Durchmesser und dann durch den Spalt zwischen ein oder mehr Walzenpaaren und eine Produktaustrittsstelle laufen. Eine Methode zum Beschicken des unteren Bandes mit Filterkuchen besteht darin, diesen wieder aufzuschlämmen und dann die Aufschlämmung auf das Band zu pumpen. Andererseits kann man den Filterkuchen auch mit einem mit Leisten versehenen Zubringerband aufbringen. Obwohl technisch möglich, bringt manuelles Aufschaufeln des Filterkuchens auf das Band hohe Arbeitskosten.

Bandspannung, Größe, Anzahl und Anordnung der «Oberflächendruck»-Walzen, die Anzahl Walzenpaare und der an die Walzen angelegte Druck sowie die Bandgeschwindigkeit werden so gewählt, daß man einen optimalen Entwässerungseffekt erzielt, dabei ein Ausdrücken des Filterkuchens an den Bandrändern vermeidet und ein Produkt herstellt, dessen Endgehalt an Wasser nicht mehr als 10% über dem kritischen Feuchtigkeitsgehalt des Pigmentes im zu entwässernden Filterkuchen oder Suspension liegt. Das entwässerte Produkt wird zweckmäßig mittels Messern ausgetragen, die nahe an den Bändern angebracht sind.

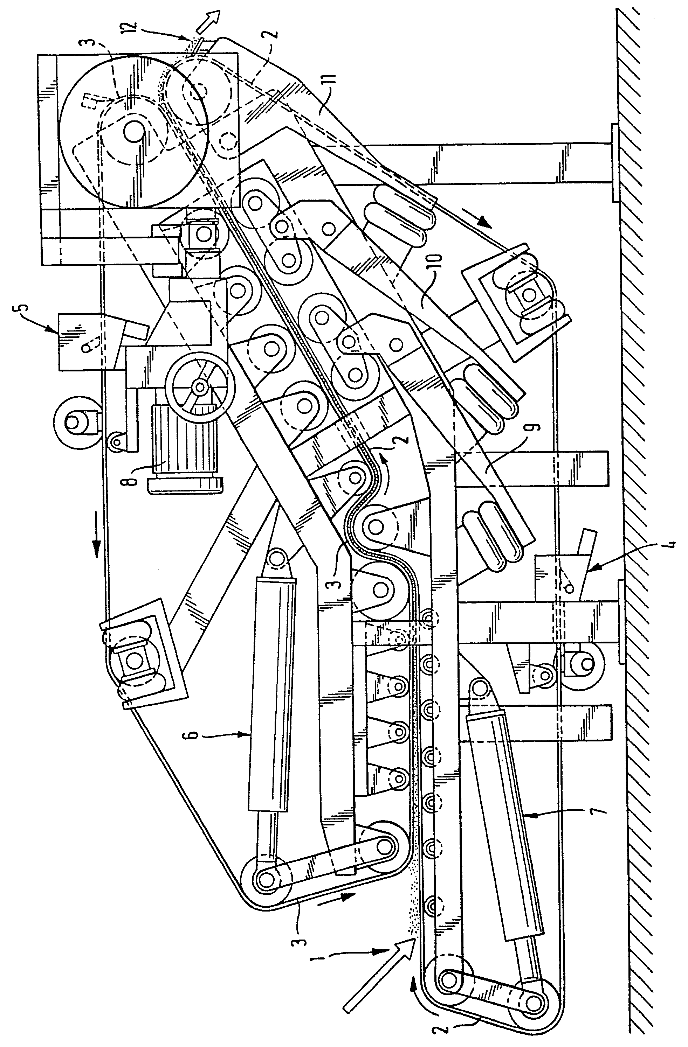

Eine besonders geeignete Presse zur Durchführung des erfindungsgemäßen Verfahrens ist die Andritz-Presse, wie sie in Figur 1 dargestellt ist. Figur 1 gibt eine schematische Seitenansicht einer Anordnung wieder, die zur Entwässerung von Pigmentfilterkuchen und Suspensionen geeignet ist.

Die Bandfilterpresse gemäß Figur 1 hat einen Filterkucheneingang bei 1, ein unteres endloses Band 2 und ein oberes endloses Band 3. Die Bänder 2 und 3 werden bei gleicher linearer Geschwindigkeit durch einen Motor 8 mit variabler Geschwindigkeit bewegt. Band 2 ist mit einer Waschanlage 4 und Band 3 analog mit einer Waschanlage 5 ausgerüstet. Das obere und untere Band 3 und 2 werden gleichermaßen durch die Arme 6 und 7 gespannt, auf die ein variabler Druck bis zu 3,5 bar wirkt und die die Höhe des angelegten Druckes bestimmen, wenn die Bänder um die 3 Oberflächendruckwalzen laufen. Der Liniendruck wird durch die Druckarme 9 (max. Liniendruck 150 N/mm), 10 (max, Liniendruck 180 N/mm) und 11 (max. Liniendruck 250 N/mm) angelegt. Am Produktausgang 12 erfolgt die Austragung zweckmäßig mittels einer Messerklinge.

Der erfindungsgemäß erhaltene Produkt fällt in Schuppenform an und hat in der Regel einen Trokkengehalt von 40 bis 85%. Dies kann mit einem typischen Trockengehalt von 15 bis 45% für einen Filterkuchen aus einer Platten- oder Rahmenpresse oder mit einem typischen Trockengehalt von 5 bis 35% für eine Pigmentaufschlämmung verglichen werden. Im allgemeinen läßt sich eine optimale Trockenheit der Endprodukte dadurch erzielen, daß man relativ niedrige Bandgeschwindigkeiten (1,0 bis 5,0 m/min) verwendet und die jeweiligen Liniendrücke schrittweise erhöht.

Das erfindungsgemäße Entwässerungsverfahren läßt sich auf jedes Filterkuchenausgangsmaterial anwenden, wie z.B. C.I. Pigment Gelb 13 und C.I. Pigment Gelb 3, C.I. Pigment Blau 15 und auf Pigmentsuspensionen, wie z.B. von C.I. Pigment Blau 66 (20% Feststoffe), sowie auf anorganische Pigmente.

Die nach dem erfindungsgemäßen Verfahren erhaltenen Produkte zeichnen sich durch ihre Transport- und Lagerstabilität aus, sind frei fließend und verhalten sich wie trockene Feststoffe. Demgegenüber neigen Produkte mit einem Wassergehalt von mehr als 10% über ihrem kritischen Feuchtigkeitsgehalt beim Lagern und/oder Transport zum Kompaktwerden, sie sind nicht frei fließend und weisen ein für Filterkuchen typisches Verhalten auf. Produkte mit bedeutend weniger Wasser als ihrem kritischen Feuchtigkeitsgehalt entspricht, sind teurer herzustellen, da ihre Herstellung mehr Energie verlangt und die Geschwindigkeit der Herstellung oft verringert ist. Ihre Lager-, Transport- und Fließbarkeitseigenschaften sind jedoch unbeeinträchtigt, obwohl sich eine Neigung zu vermehrtem Stäuben zeigt.

Die erfindungsgemäß erhaltenen Produkte sehen trocken aus, sind staubarm oder staubfrei und frei fließend. Obwohl man wegen der harten Behandlungsbedingungen erwarten müßte, daß die entwässerten Pigmente zusammenbacken und daher schlecht dispergierbar wären, zeigt es sich jedoch, daß die erfindungsgemäß erhaltenen Produkte eine zum Ausgangsfilterkuchen vergleichbare Dispergierbarkeit aufweisen.

Das erfindungsgemäße Verfahren beseitigt oder, wo das meiste Restwasser in den entwässerten Schuppen durch Wärmetrocknen beseitigt wird, vermindert die durch den thermischen Trocknungsvorgang verursachte Aggregatbildung. Solch eine Beseitigung oder Verminderung des Wärmetrocknens bringt Einsparungen in den Herstellungskosten. Zudem begünstigt die Beseitigung oder Verminderung der durch die Wärmetrocknung verursachten Aggregatbildung wesentlich die Pigmentqualität der so erhaltenen Produkte und verringert die Weiterverarbeitungskosten. Vergleicht man die erfindungsgemäß entwässerten schuppenartigen Produkte mit trockenem Pulver, so zeigen sich beispielsweise stark verkürzte Dispersionszeiten, und die schuppenförmigen Produkte weisen höheren Glanz, Transparenz, Leuchtkraft und Farbstärke auf.

Verglichen mit Filterkuchen lassen sich die entwässerten Schuppen beträchtlich vorteilhafter weiterverarbeiten und besser handhaben.

Die folgenden Beispiele erläutern die vorliegende Erfindung. Prozente bedeuten Gewichtsprozente.

Beispiel 1 bis 4

Ein wässeriger Filterkuchen von C.I. Pigment Gelb 3 mit einem Feststoffgehalt von 36% wird auf der in Figur 1 dargestellten Maschine entwässert, wobei man die folgenden Verfahrensparameter verwendet:

| | |
|---|---|
| Bandgeschwindigkeit | 1,10 m/min |
| Bandspannungsdruck oben | 2,5 bar |
| Bandspannungsdruck unten | 2,5 bar |
| Liniendruck Zone 1 | 150 N/mm |
| Liniendruck Zone 2 | 175 N/mm |
| Liniendruck Zone 3 | 230 N/mm |
| Entladungsgeschwindigkeit | 120 kg/h |

Das Produkt ist staubfrei und hat einen Feuchtigkeitsgehalt von 30%. Dies ist weniger als der kritische Feuchtigkeitsgehalt, der experimentell bestimmt wurde und 32% beträgt. [Siehe diesbezüglich Perry's Chemical Engineers Handbook, from John H. Perry, 4th edition, 1963, Publisher Mcgraw Hill].

Ähnliche Ergebnisse erhält man mit C.I. Pigment Gelb 13, C.I. Pigment Blau 15 und C.I. Pigment Blau 66.

Beispiel 5

Eine Pigmentzusammensetzung aus 85% wässerigem C.I. Pigment Gelb 13-Filterkuchen und 15% Acrylharz wird auf der in Figur 1 dargestellten Maschine entwässert, wobei man die folgenden Verfahrensparameter verwendet:

| | |
|---|---|
| Bandgeschwindigkeit | 4,35 m/min |
| Bandspannungsdruck oben | 2,5 bar |
| Bandspannungsdruck unten | 2,5 bar |
| Liniendruck Zone 1 | 55 N/mm |
| Liniendruck Zone 2 | 75 N/mm |
| Liniendruck Zone 3 | 135 N/mm |
| Entladungsgeschwindigkeit | 120 kg/h |

Das Produkt ist staubfrei, freifließend und hat einen Feuchtigkeitsgehalt von 45%. Dies ist weniger als der kritische Feuchtigkeitsgehalt, der 50% beträgt.

## Patentansprüche

1. Verfahren zum Entwässern eines Pigmentfilterkuchens oder einer Pigmentsuspension, wobei man den Filterkuchen oder die Suspension in den Spalt zwischen zwei sich gegenläufig drehenden endlosen Bändern eingibt, die sich unter Spannung um eine oder mehrere Walzen bewegen, dabei an den Filterkuchen oder die Suspension einen Oberflächendruck anlegt und anschließend den Filterkuchen oder die Suspension variablen «Liniendrucken» zwischen ein oder mehr Paaren von sich gegenläufig drehenden druckbelasteten Walzen unterwirft, wobei die Bänder aus einem für die Flüssigkeit im Filterkuchen oder in der Suspension durchlässigen Material bestehen, und die Bedingung gilt, daß für jedes entwässerte Pigmentprodukt Oberflächendruck, Liniendruck und Bandgeschwindigkeit so gewählt werden, daß der Endwassergehalt des Produktes nicht mehr als 10% höher als der kritische Feuchtigkeitsgehalt des Pigmentes im zu entwässernden Filterkuchen oder in der zu entwässernden Suspension ist, wobei das erhaltene Produkt in Schuppenform anfällt.

2. Verfahren nach Anspruch 1, dadurch gekennzeichnet, daß für jedes entwässerte Pigmentprodukt Oberflächendruck, Liniendruck und Bandgeschwindigkeit so gewählt werden, daß der Endwassergehalt gleich oder geringer als der kritische Feuchtigkeitsgehalt des Pigmentes im Filterkuchen oder in der Suspension ist, die zu entwässern sind.

3. Verfahren nach Anspruch 1, dadurch gekennzeichnet, daß sich die Bänder um zwei oder mehr Rollen mit abnehmenden Durchmessern bewegen, wobei an den Filterkuchen oder die Suspension ein zunehmender Oberflächendruck angelegt wird.

4. Verfahren nach Anspruch 1, dadurch gekennzeichnet, daß man das kontinuierliche Band mit Filterkuchen beschickt, indem man diesen wieder aufschlämmt und die Aufschlämmung auf das Band pumpt.

5. Verfahren nach Anspruch 1, dadurch gekennzeichnet, daß man den Oberflächendruck mittels oberen und unteren Bandspannungsarmen an den Filterkuchen anbringt.

6. Verfahren nach Anspruch 1, dadurch gekennzeichnet, daß die «Liniendrucke» in einer oder mehreren Zonen mittels druckbelasteten Armen ausgeübt werden, wobei in jeder Zone ein separater Druckarm verwendet wird.

7. Verfahren nach Anspruch 6, dadurch gekennzeichnet, daß die «Liniendrücke» in drei Zonen ausgeübt werden und die maximalen Liniendrücke in diesen drei Zonen jeweils 150 N/mm, 180 N/mm und 250 N/mm betragen.

## Claims

1. A process for dewatering a pigment filter-cake or a pigment suspension comprising feeding the filter-cake or suspension into the nip between two counter-rotating endless bands moving under tension around one or more rollers, thereby applying surface pressure to the filter-cake or suspension and subsequently causing the filter-cake or suspension to be subjected to variable «line pressures», between one or more pairs of counter-rotating pressure-loaded rollers, the bands comprising a material permeable to the liquid in the filter-cake or suspension, provided that, for each dewatered pigment product, surface pressure, line pressure and band speed are so chosen that the final water content of the product is not more than 10% greater than the critical moisture content of the pigment in the filter-cake to be watered or in the suspension to be dewatered, the resulting product being obtained in the form of flakes.

2. A process according to claim 1, wherein, for each dewatered pigment product, surface pressure, line pressure and band speed are so chosen that the final water content is equal to or less than the critical moisture content of the pigment in the filter-cake or suspension to be dewatered.

3. A process according to claim 1, wherein the bands move around two or more rollers of decreasing diameters thereby applying increasing surface pressure to the filter-cake or suspension.

4. A process according to claim 1, wherein the filter-cake is fed onto the continuous band by re-slurrying the filter-cake and pumping the slurry onto the band.

5. A process according to claim 1 wherein the surface pressure is applied to the filter-cake by means of upper and lower band tensioning arms.

6. A process according to claim 1, wherein the «line pressure» is effected in one or more zones by means of pressure-loaded arms, a separate pressure arm being employed in each zone.

7. A process according to claim 6, wherein the «line pressures» are effected in three zones and the maximum line pressures in these three zones are, respectively, 150 N/mm, 180 N/mm and 250 N/mm.

## Revendications

1. Procédé pour déshydrater un gâteau de filtration de pigment ou une suspension de pigment, procédé dans lequel on introduit le gâteau ou la suspension dans l'intervalle entre deux bandes sans fin tournant en sens opposés et qui se meuvent sous tension autour d'un ou de plusieurs tambours, ce qui crée sur le gâteau ou la suspension une pression de surface, puis on soumet le gâteau ou la suspension à une pression linéaire variable telle que précédemment définie entre une ou plusieurs paires de tambours de pression qui tournent en sens opposés, les bandes étant en une matière perméable au liquide du gâteau ou de la suspension, et pour chaque produit pigmentaire déshydraté la pression de surface, la pression linéaire et la vitesse des bandes étant choisies de manière que la teneur finale en eau du produit ne soit pas supérieure de plus de 10% à la teneur critique en humidité du pigment du gâteau ou de la suspension à déshydrater, le produit étant obtenu en écailles.

2. Procédé selon la revendication 1 caractérisé en ce que pour chaque produit pigmentaire déshydraté on détermine la pression de surface, la pression linéaire et la vitesse des bandes de manière que sa teneur finale en eau soit égale ou inférieure à la teneur critique en humidité du pigment du gâteau de filtration ou de la suspension à déshydrater.

3. Procédé selon la revendication 1 caractérisé en ce que les bandes tournent autour de deux rouleaux ou plus à diamètre décroissant, ce qui crée une pression de surface croissante sur le gâteau ou sur la suspension.

4. Procédé selon la revendication 1 caractérisé en ce que l'on alimente en gâteau la bande continue en remettant le gâteau en suspension et en pomptant la suspension sur la bande.

5. Procédé selon la revendication 1 caractérisé en ce que l'on applique la pression de surface au gâteau de filtration par des bras de tension des bandes supérieur et inférieur.

6. Procédé selon la revendication 1 caractérisé en ce que les «pressions linéaires» sont exercées dans une ou plusieurs zones par des bras de pression, avec dans chaque zone une bras séparé.

7. Procédé selon la revendication 6 caractérisé en ce que les «pressions linéaires» s'exercent dans trois zones dans lesquelles les pressions linéaires maximales sont respectivement de 150 N/mm, 180 N/mm et 250 N/mm.

EP 0 100 751 B1